# EUROPEAN PATENT APPLICATION

(11) **EP 2 784 980 A1**
(43) Date of publication of application: **01.10.2014**
(21) Application number: 13305362.9
(22) Date of filing: 25.03.2013
(51) Int. Cl.: H04L 12/24

(54) **Dynamic license management**

(71) Applicant: ALCATEL LUCENT, 92100 Boulogne-Billancourt (FR)
(72) Inventor: Joubert, Eric, 91620 Nozay (FR); Cazes, Daniel, 91620 Nozay (FR); Kadi, Pierre, 91620 Nozay (FR)
(74) Representative: Mouney, Jérôme

(57) **Abstract**

For a dynamic license management in a telecommunication network (TN), a server (EMS) that is included in the telecommunication network and able to supervise network elements (NE) defines a set of model descriptions (MDes) for different types of network elements, each model description (MDes) containing attributes representing the resources and functions that are applied to a type of network element, each attribute being mapped to a set of licenses (Ln) and provides a model description (MDes) to a network element (NE).

After reception of a set of update messages (MesU) sent from the network element (NE) or the operator of the telecommunication network, the update messages (MesU) comprising information about resources and functions used by the network element, the server identifies the model description (MDes) associated with the network element (NE), and identifies the licenses (Ln) to be used for the network element by correlating the information contained in the update messages with the attributes contained in the model description.

## Description

### FIELD OF THE INVENTION

The present invention generally relates to the management of licenses within telecommunication networks, such as wireless networks, particularly for heterogeneous elements in such networks.

### BACKGROUND

In the context of telecommunication networks containing numerous, various and heterogeneous elements, licensing question is a complex problematic.

Elements of a network may thus:
- hold different roles in the network functionality, like core elements, access elements, backhaul elements, supervision elements, etc...,
- host diverse applications,
- provide different capacity in term of traffic for supported end-users.

As a consequence, network providers may need several levels of licenses to deliver an adapted and "fair priced" offer to the network operator. A licensing mechanism based on the real need and real consumption of the operator is then appropriate.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for a dynamic license management in a telecommunication network, comprising the following steps in a server that is included in the telecommunication network and able to supervise network elements:
defining a set of model descriptions for different types of network elements, each model description containing attributes representing the resources and functions that are applied to a type of network element, each attribute being mapped to a set of licenses,
providing a model description to a network element,
receiving a set of update messages, the update messages comprising information about resources and functions used by the network element,
identifying the model description associated with the network element, and identifying the licenses to be used for the network element, by correlating the information contained in the set of update messages with the attributes contained in the model description.

Advantageously, the invention offers an additional feature to the telecommunication network, allowing a dynamic licensing process, based on the presence, characteristics, types and operational states of network elements.

The invention allows to dynamically evaluating the real consumption of resources in a telecommunication network to be able to propose an appropriate pricing strategy to operators. Thanks to the link made between the licenses evaluation and the configuration of the network elements, the operator is able to pay for the real resource consumption of its telecommunication network.

License resources are consumed dynamically according to the real activity of the network elements and according to their real characteristics. Without such a mechanism, the pricing offer would have been rough and may have lead to operator complains if they had to pay for unused or for underutilized products.

In an embodiment, an attribute is mapped to a set of licenses through the intermediate of a set of selectors, each selector of the set of selectors being associated to a respective license of the set of licenses, and each selector in the set of selectors being a logical reference that is defined from a possible value of another attribute in the model description among different values.

Advantageously, thanks to the selectors, an offer can proposed to price differently some features depending on the type of network element on which these features are activated. These characteristics may evolve during the life of the system leading to a dynamic re-evaluation of the licenses consumption.

More precisely, the selectors offer the possibility to perform dynamic and precise distinctions between the different types of network elements active in the telecommunication network. This distinction may thus be made on every single characteristic or attribute of these network elements. Any change of such a characteristic during the system's life will dynamically produce a new calculation of the licenses consumption.

In an embodiment, each selector is associated with a value and is set as active when said another attribute has said value.

In an embodiment, a license is identified to be used when a selector associated with said license is set as active.

In an embodiment, the set of update messages is sent from the network element or from the operator of the telecommunication network.

In an embodiment, the set of update messages comprises one message or several messages.

In an embodiment, the server sends a warning to the operator of the telecommunication network, when the number of consumed tokens for at least one license reaches a level approaching the maximum number of resources bought by the operator.

The invention also pertains to a server for a dynamic license management in a telecommunication network, the server being included in the telecommunication network and able to supervise network elements, the server comprising:
means for defining a set of model descriptions for different types of network elements, each model description containing attributes representing the resources and functions that are applied to a type of network element, each attribute being mapped to a set of licenses,
means for providing a model description to a network element,
means for receiving a set of update messages, the update messages comprising information about resources and functions used by the network element,
means for identifying the model description associated with the network element and for identifying the licenses to be used for the network element, by correlating the information contained in the update messages with the attributes contained in the model description.

The invention also pertains to a computer program capable of being implemented within a server, said program comprising instructions which, when the program is executed within said server, carry out steps according to the method according to the invention.

The present invention and the benefits thereof shall be better understood upon examining the description below, which makes reference to the attached figures, in which:
- FIG. 1 is a schematic block diagram of a communication system according to one embodiment of the invention for a dynamic license management in a telecommunication network;
- FIG. 2 depicts an example of a selector usage for a given attribute of the model description of a network element, and
- FIG. 3 is an algorithm of a method for a dynamic license management in a telecommunication network according to one embodiment of the invention.

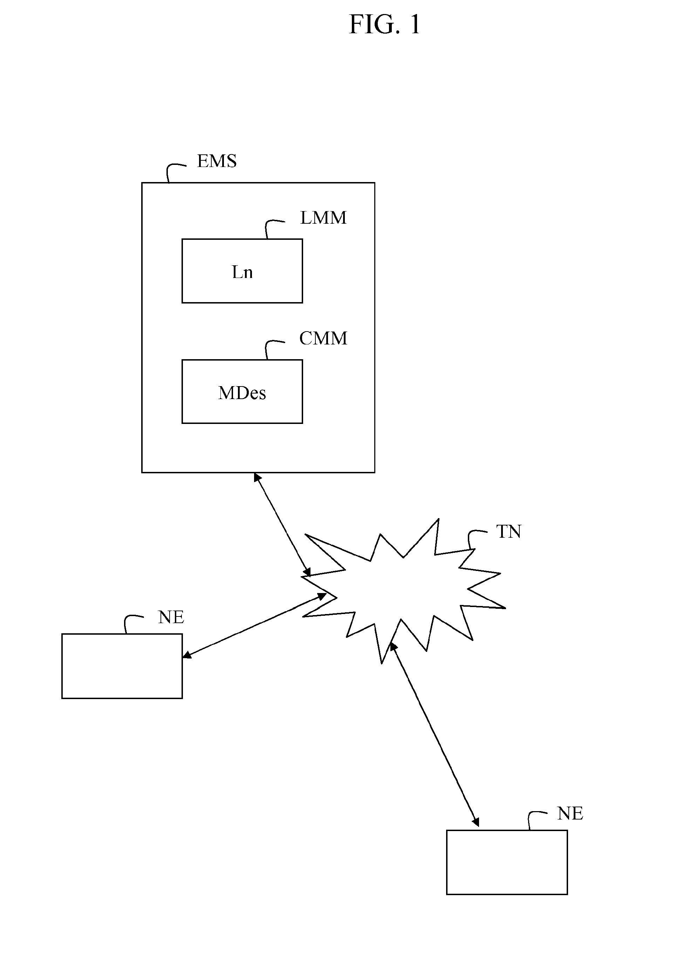

With reference to FIG. 1, a communication system according to the invention comprises an element management server EMS and a set of network elements NE able to communicate between them within a telecommunication network TN.

The telecommunication network TN may be a wireless network, or a combination of wired and wireless networks.

The wireless networks may use the GPRS (General Packet Radio Service) and EDGE (Enhanced Data rates for GSM Evolution) of the second mobile communication generation (2G) relying on packet exchange using radio waves with frequency division duplex and phase shift keying.

The wireless network may be of the third generation (3G) using the UMTS (Universal Mobile Telecommunication System) norm, based for example on the W-CDMA technology (Wideband Code Division Multiple Access Evaluation). The transitional third generation (so called 3G+ or 3.5 to 3.9G) of the 3GPP or 3GPP2 (Third Generation Partnership Projects 1 and 2) rely on HSDPA (High Speed Downlink Packet Access) and HSUPA (High Speed Uplink Packet Access).

The wireless network may be of the fourth generation (4G) relying on the LTE (Long Term Evolution) derivation of transitional third generation or the emerging WiMAX (Worldwide Interoperability for Microwave Access).

In order to not encumber the FIG. 1, only two network elements NE are represented.

The network elements may be of different usages, like backhaul, access, or core elements, of different capacity, for example small, medium or high, and may process different level of traffic at a given time. For example, a network element NE is a base station and may be a LTE eNB (Evolved Node B).

A given operator managing the telecommunication network TN owns a list of bought licenses according to a desired usage adapted to the network. A license may be a capacity license concerning typically a number of supported end-users or traffic capacity, or may be an application license allowing the activation of features on the network elements.

The list of licenses Ln, with n ∈ {1, ..., N} and N being the number of licenses, is stored in element management server EMS that supervises the different network elements concerned by these licenses. To each license corresponds a number of token that will be consumed by the network according to its real activity.

The element management server EMS comprises a configuration management module CMM and a license management module LMM.

In the remainder of the description, the term module may designate a device, a software program, or a combination of computer hardware and software, configured to execute at least one particular task.

The server EMS is responsible for the configuration management of the different network elements NE. To this end, the configuration management module CMM contains a model description MDes for each type of network elements NE it has to supervise. The model description MDes is a digital file that contains a list of elementary objects with attributes representing the resources and functions that are applied to a network element. Depending on the provisioning of each network element, the configuration management module CMM is able to allocate different resources that are represented by different objects to each of these network elements NE when they are discovered by the server EMS. Optionally, some of the resources consumed by a network element may also be dynamically allocated to this network element during its operation. For example, the objects can be linked through a hierarchy under the form of a tree.

The license management module LMM manages a set of licenses to be used by the supervised network elements. The license management module LMM defines how attributes in the model description MDes will be mapped to dedicated licenses Ln. In other words, a given attribute may correspond to a given characteristic of the network element. The license management module LMM provides the information related to the mapping to the configuration management module CMM.

As an example, a given attribute X1 may be dedicated to a given application A1. When the server EMS will provide the configuration to a network element NE, the server EMS will identify how many objects having the attribute X1 will be used by the network element. The license management module further provides a mapping between the attribute X1 and the licenses for the application A1. Thanks to this mapping, the server EMS is able to process dynamically the number of token of the license associated to the application A1 that will be consumed by the network element NE.

The license management module LMM provides associations between some model attributes and license references. When a network element is managed by the server EMS and when the configuration is provided to this network element, the server EMS process a list of model attributes associated to licenses that are used for this network element and then the tokens of the related licenses are decremented accordingly. This allows a first dynamic level of license consumption according to the real activity of the network element. In addition to this first level, the server EMS allows through the usage of optional selectors an additional level of dynamic license consumption as described in details hereinafter.

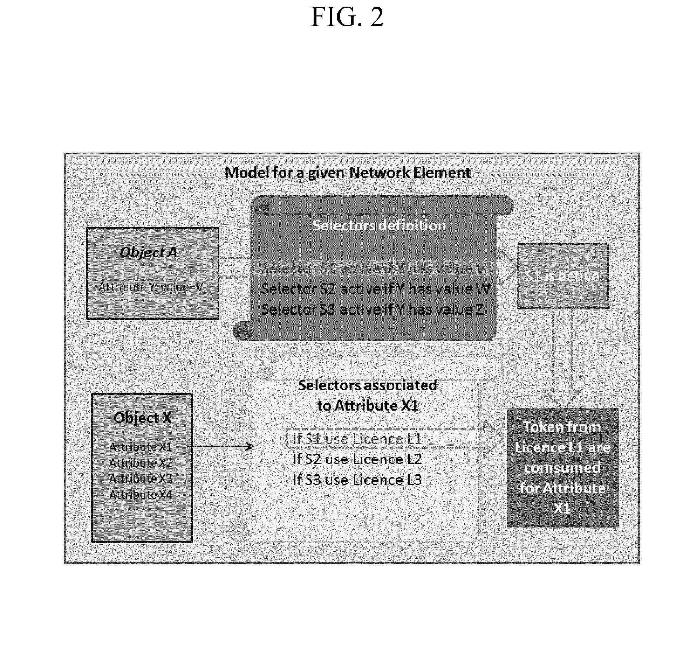

The underlying functioning of the association between the model description MDes and the license with selectors is hereinafter described with respect to FIG. 2

More especially, the license management module LMM indicates how to link attributes to corresponding licenses through the intermediate of a set of selectors Sk, with k ∈ {1, ..., K} and K being the number of selectors. A given selector Sk is a logical reference that is defined from the possible value of a given model attribute. A selector "S1" will be active for a network element if this one contains an object with the attribute "Y" having the value "V". If the attribute "Y" has a value "W" different than "V" then the selector "S1" is not active, but a selector "S2" that would be defined from the value "W" of the attribute "Y" would then be active.

The license management module LMM uses selectors in order to map a given attribute to a set of licenses. Depending on the active state of the selectors, one license or another will be used for a given attribute. A selector allows thus to perform a dynamic choice between a set of possible licenses for a given attribute. In the example depicted in FIG. 2, the model description of a given network element contains an object A with an attribute Y that can have three different values: V, W or Z and an object X with four attributes X1, X2, X3 and X4, each attribute of X being associated to a set of licenses, for example attribute X1 being associated with licenses L1, L2 and L3. As object A has attribute Y with value V, selector S1 is active. Then, for attribute X1 of object X, license L1 is selected as selector S1 is active. Dynamically, the token from license L1 can be consumed for the attribute X1. If, during the life of the system, attribute Y gets the value W, then selector S1 will become inactive and selector S2 will become active. As a consequence, dynamically, license consumption for attribute X1 will be re-evaluated: for X1, tokens from license L1 will be released while tokens from license L2 will be consumed.

For instance with reference to FIG. 2, a network element is a base station of type LTE eNB and selectors can be used to distinguish METRO, MACRO and PICO eNB. In this case, the value of the attribute Y of object A can determine the nature of the network element. For example, the value V of attribute Y corresponds to a METRO eNB, the value W of attribute Y corresponds to a MACRO eNB and the value Z of attribute Y corresponds to a PICO eNB. For attribute X1 of object X, that corresponds to a function of the base station, e.g. a handover, the resources of the telecommunication network to be used depend on the nature of the network element. Thanks to the use of selector, the token from the appropriate license can be consumed for the attribute X1, i.e. the function used by the network element.

A typical usage of a selector is to be able to differentiate network elements that share the same model description but that differs due to a particular characteristic or attribute (for example different level of a given hardware board), that may vary dynamically or not during the life of the network element. This allows proposing a different price for some particular licenses for these different network elements.

Such a selector usage offers thus a second level of dynamicity for license consumption:
- the first level of dynamicity is given by the real usage of model description objects (and associated attributes) by a given network element;
- the second level of dynamicity is given by a particular characteristic of network element, that is known by the server EMS when the network element is discovered, and that allows activation of a specific selector that gives access to a dedicated license. In addition, this network element characteristic may change during the life of the system inducing then a new re-calculation of the number of license consumed.

When the server EMS discovers a network element, the server EMS sends a model description MDes dedicated to the type of the network element. For that, the configuration management module CMM can store model descriptions MDes in correspondence with identifiers of network elements, a given identifier being associated with a given type of network element. Thus, various network element of same type, such as base stations, may have the same identifier and receive the same model description.

The server EMS discovers a network element when it is connected to this latter for the first time, after that the network element has been deployed and installed. There can be two cases of discovery.

In a first case, the network element is installed with a default configuration. Once first connection between the server EMS and the network element is established, the server EMS selects a model description MDes associated with the type of the network element and sends the selected model description MDes to the network element. The server EMS determines the license identities and the number of these licenses to be used for the concerned network element.

In a second case, the operator knows the desired characteristics of the network element and this latter is already pre-configured and ready to start working. Once first connection between the server EMS and the network element is established, the network element provides information about its current state to the server EMS, receives configuration parameters and then the server EMS selects the appropriate licenses and consumes the token associated to these selected licenses.

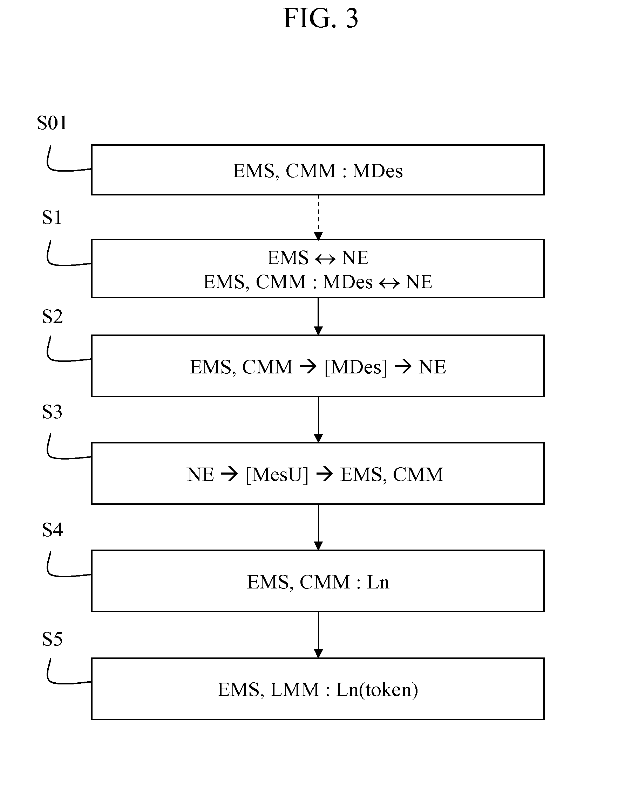

With reference to Figure 3, a method for a dynamic license management in a telecommunication network according to one embodiment of the invention comprises steps S1 to S5 executed within the communication system.

In a preliminary step S01, the configuration management module CMM defines a set of model descriptions MDes for the different types of network elements NE to be supervised.

In step S1, the server EMS discovers a network element NE by connecting to it for the first time. The configuration management module CMM detects the type of the network element, by interrogating it for example, and selects a model description MDes associated with the type of the network element.

In step S2, the configuration management module CMM sends the selected model description MDes to the network element NE.

The network element NE is then configured with information contained in the model description MDes, defining objects with attributes representing the resources and functions that are applied to a network element.

In all cases, a model description MDes is provided to the network element by the server EMS.

In step S3, the server EMS receives a set of update messages MesU to the server EMS, the set of update messages MesU comprising information about current operation and activity of the network element, which means resources and functions used by the network element. The set of update messages MesU can comprise one or several messages and can be sent from the network element NE or from the operator of the telecommunication network. In this last case, the operator may be a physical person acting directly or indirectly on the server EMS through a user interface.

For example, an update message indicates which features or functions are activated and is sent after the network element NE has triggered an action to modify an attribute, such as the number of operating resources associated with an active cell. If the network element NE has automatically changed a configuration parameter, or under the command of the operator, this change creates a new resource or function used by the network element that has to be updated to the server EMS.

In other terms, the network element NE is continuously supervised by the server EMS, thus information about current operation and activity of the network element is precisely known by the server EMS, which means resources and functions used by the network element. For example, the server EMS knows which features or functions are activated and which traffic capacity is running.

In step S4, the configuration management module CMM identifies the model description MDes associated with the network element NE and identifies the licenses Ln and the number of these licenses to be used for the concerned network element, by correlating the information contained in the set of update messages MesU with the objects with attributes contained in the model description MDes.

More especially, the configuration management module CMM deduce values of attributes associated with selectors in order to set appropriate selectors Sk as active and to identify licenses Ln associated with active selectors Sk.

The set of update messages can comprise only one message indicating at least one change in the use of functions or resources by the network element. In a variant, the set of update messages can comprise several messages, each indicating at least one change in the use of functions or resources by the network element, the identification of license being done by means of a combination of changes in the use of functions or resources by the network element.

In step S5, the license management module LMM collaborates with the configuration management module CMM in order to get the information related to the identified licenses and determines then the real consumption of tokens for each identified license for the network element NE.

Steps S3 to S5 can be reiterated for each network element supervised by the server EMS.

The server EMS can provide a mechanism of thresholds allowing a warning to the operator when the number of consumed tokens, for some given licenses, reaches a level approaching the maximum number of resources bought by the operator. This allows the operator to anticipate its need and to buy additional resources in advance of time.

If the maximum number of resources is consumed for a given license, the reaction of the server EMS may be of different kind depending on operator/constructor agreement, for example:
- only the corresponding feature or corresponding capacity resources would be blocked on the concerned network element,
- the corresponding feature or corresponding capacity resources would be blocked for the all network elements,
- all the features and capacity resources would be blocked for the concerned network element,
- all the features and capacity resources would be blocked for the all networks elements.

The invention described here relates to a method and a server for a dynamic license management in a telecommunication network. According to one implementation of the invention, the steps of the invention are determined by the instructions of a computer program incorporated into the server, such as the server EMS. The program includes program instructions which, when said program is executed in a processor of the server the operation whereof is then controlled by the execution of the program, execute the steps of the method according to the invention.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other desirable form for implementing the method according to the invention.

## Claims

1. A method for a dynamic license management in a telecommunication network (TN), comprising the following steps in a server (EMS) that is included in the telecommunication network and able to supervise network elements (NE):
defining (S01) a set of model descriptions (MDes) for different types of network elements (NE), each model description (MDes) containing attributes representing the resources and functions that are applied to a type of network element, each attribute being mapped to a set of licenses (Ln),
providing (S2) a model description (MDes) to a network element (NE),
receiving (S3) a set of update messages (MesU), the update messages (MesU) comprising information about resources and functions used by the network element,
identifying (S4) the model description (MDes) associated with the network element (NE), and identifying the licenses (Ln) to be used for the network element (NE), by correlating the information contained in the set of update messages (MesU) with the attributes contained in the model description (MDes).

2. A method according to claim 1, whereby an attribute is mapped to a set of licenses through the intermediate of a set of selectors, each selector of the set of selectors being associated to a respective license of the set of licenses, and each selector in the set of selectors being a logical reference that is defined from a possible value of another attribute in the model description (MDes) among different values.

3. A method according to claim 2, whereby each selector is associated with a value and is set as active when said another attribute has said value.

4. A method according to claim 3, whereby a license is identified to be used when a selector associated with said license is set as active.

5. A method according to any of claims 1 to 4, whereby the set of update messages (MesU) is sent from the network element (NE).

6. A method according to any of claims 1 to 4, whereby the set of update messages (MesU) is sent from the operator of the telecommunication network (TN).

7. A method according to any of claims 1 to 4, whereby the set of update messages (MesU) comprises one message.

8. A method according to any of claims 1 to 4, whereby the set of update messages (MesU) comprises several messages.

9. A method according to any of claims 1 to 8, whereby the server (EMS) sends a warning to the operator of the telecommunication network (TN), when the number of consumed tokens for at least one license reaches a level approaching the maximum number of resources bought by the operator.

10. A server (EMS) for a dynamic license management in a telecommunication network (TN), the server being included in the telecommunication network and able to supervise network elements (NE), the server comprising:
means (LMM) for defining a set of model descriptions (MDes) for different types of network elements (NE), each model description (MDes) containing attributes representing the resources and functions that are applied to a type of network element, each attribute being mapped to a set of licenses (Ln),
means (CMM) for providing a model description (MDes) to a network element (NE),
means (CMM) for receiving a set of update messages (MesU), the update messages (MesU) comprising information about resources and functions used by the network element,
means (LMM) for identifying the model description (MDes) associated with the network element (NE) and for identifying the licenses (Ln) to be used for the network element (NE), by correlating the information contained in the update messages (MesU) with the attributes contained in the model description (MDes).

11. A computer program capable of being implemented within a server for a dynamic license management in a telecommunication network (TN), said server being included in the telecommunications network and able to supervise network elements (NE), said program comprising instructions which, when the program is loaded and executed within said server, carry out the following steps:
defining (S01) a set of model descriptions (MDes) for different types of network elements (NE), each model description (MDes) containing attributes representing the resources and functions that are applied to a type of network element, each attribute being mapped to a set of licenses (Ln),
providing (S2) a model description (MDes) to a network element (NE),
receiving (S3) a set of update messages (MesU), the update messages (MesU) comprising information about resources and functions used by the network element,
identifying (S4) the model description (MDes) associated with the network element (NE), and identifying the licenses (Ln) to be used for the network element (NE), by correlating the information contained in the update messages (MesU) with the attributes contained in the model description (MDes).
